# EUROPÄISCHE PATENTSCHRIFT

(11) **EP 2 058 178 B1**
(45) Veröffentlichungstag und Bekanntmachung des Hinweises auf die Patenterteilung: **23.12.2015**
(21) Anmeldenummer: 08075718.0
(22) Anmeldetag: 22.08.2008
(51) Int. Cl.: B60R 11/04, H01H 19/62, H02P 3/02, B60R 11/00

(54) **Antrieb für einen beweglichen Teil in einem Fahrzeug, wie einer verfahrbaren Kamera**
Drive for a moveable part in a vehicle, such as a mobile camera
Entraînement pour un élément mobile dans un véhicule, comme une caméra déplaçable

(30) Priorität: 08.11.2007 DE 102007053117
(43) Veröffentlichungstag der Anmeldung: 13.05.2009
(73) Patentinhaber: Huf Hülsbeck & Fürst GmbH & Co. KG, 42551 Velbert (DE)
(72) Erfinder: Buschmann, Gerd, 42553 Velbert (DE)
(74) Vertreter: Buse, Mentzel, Ludewig Patentanwaltskanzlei

(56) Entgegenhaltungen:
- DE-A1- 2 054 810
- DE-A1-102004 007 943
- DE-B- 1 077 764
- DE-B- 1 161 792
- DE-C- 603 026
- JP-A- H07 101 408
- US-A- 6 113 459

## Beschreibung

Die Erfindung bezieht sich auf einen Antrieb der im Oberbegriff des Anspruches 1 angegebenen Art. Ein Anwendungsfall eines solchen Antriebs ist, eine Kamera in einem Fahrzeug zwischen einer Ausfahrlage und einer geschützten Einfahrlage zu bewegen. Zum Steuern dieser Bewegung verwendet man eine Steuerkurve, die auf einem Träger angebracht ist, weshalb dieser nachfolgend "Kurventräger" genannt werden soll. Der Kurventräger wird von einem Motor bewegt, der synchron mit dem Bewegungsteil arbeitet. Bei der Bewegung des Kurventrägers fragt ein Sensor die Steuerkurve fortlaufend ab. Die vom Sensor kommenden Signale werden einem Steuergerät zugeführt und dort ausgewertet.

Ein bekannter Antrieb dieser Art ergibt sich aus der DE 1 077 764 B. Gemäß dem Oberbegriff des Anspruches 1 gibt es dort einen beweglichen Teil, der nachfolgend als Bewegungsteil bezeichnet werden soll, und einen Motor zum Bewegen eines Trägers einer Steuerkurve, die zwei aufeinanderfolgende Steuerstellen aufweist. Der Träger und die Steuerkurve bilden eine Baueinheit, die nachfolgend kurz Kurventräger genannt werden soll. Der Motor des Kurventrägers wird synchron mit dem Bewegungsteil bewegt. Es gibt einen Sensor, der dort aus einer Nase an einem federbelasteten Führungsstück besteht, die bei Bewegung des Kurventrägers den Verlauf der Steuerkurve fortlaufend abtastet. Es gibt ein Steuergerät, das vom Sensor kommende Signale auswertet und den Motor dann ausschaltet, wenn der Sensor an die erste Steuerstelle der Steuerkurve gelangt. Letztere fungiert als Ausschaltstelle für den Motor. Es gibt mindestens eine Endlage des Bewegungsteils, in welcher sich der Kurventräger bezügl. des Sensors in einer bestimmten Endposition befindet. In der vorgenannten Druckschrift haben die beiden aufeinanderfolgenden Steuerstellen über den Sensor zwei zueinander unterschiedliche Funktionen zu erfüllen. An der ersten Steuerstelle wird der Motor ausgeschaltet, weshalb diese die vorgenannte Ausschalstelle ist. An der zweiten Steuerstelle dagegen wird die Drehrichtung des Motors umgeschaltet.

Ziel eines solchen Antriebs ist es, den Bewegungsteil in mindestens einer definierten Endlage zu positionieren. Das gelingt leider nicht immer. Die Endlage ändert sich in Abhängigkeit von der Betriebsspannung, der Temperatur, der Motordrehzahl und weiteren Betriebsstörungen an diversen Elementen des Antriebs. Sofern die Anlage durch einen ortsfesten Anschlag begrenzt ist, kann es bei einer Übersteuerung zu einer Beschädigung des Bewegungsteils oder dessen Antriebsmitteln kommen. In jedem Fall ist dann das Auftreffen eines mit dem Antrieb mitbeweglichen Gegenanschlags am Anschlag geräuschvoll.

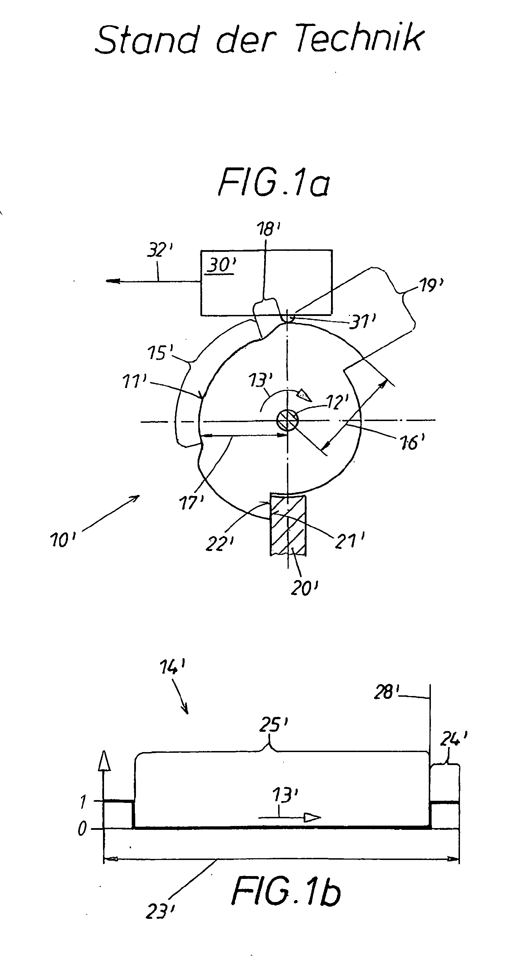

Wenn der Bewegungsteil im Stand der Technik aber nicht die definierte Endlage erreicht, ist seine Funktion beeinträchtigt oder sogar verhindert. Dies soll anhand der Fig. 1a und 1b zunächst näher erläutert werden, die anhand eines Bauteils den Stand der Technik erläutern. Es zeigen:
- Fig. 1a: eine schematische Ansicht eines Kurventrägers nach dem Stand der Technik, wenn der dazu synchron bewegte, nicht näher gezeigte Bewegungsteil sich in seiner Endlage befindet, und
- Fig. 1b: der Signalverlauf in Abhängigkeit von der Zeit, die ein Sensor von Fig. 1a einem nicht näher gezeigten Steuergerät zuführt, das auf den Motor wirkt.

Ein Kurventräger 10' weist eine Steuerkurve 11' auf, deren Verlauf von einem Fühlglied 31' eines als Mikroschalter ausgebildeten Sensors 30' fortlaufend abgetastet wird. Eine Signalleitung 32' des Sensors geht zu einem nicht näher gezeigten Steuergerät, welches einen Motor steuert. Der Motor treibt über eine Welle 12' eines nicht näher gezeigten Getriebes den Kurventräger 10' an, der sich nach dem Einschalten des Motors im Sinne des Pfeils 13' dreht. Die Fig. 1a zeigt eine Endposition des Kurventrägers 10' nach Vollzug dieser Bewegung 13', wo sich ein Ausschaltbereich 19' der Steuerkurve 11 an der Abtaststelle des Sensors 30' befindet. In Bewegungsrichtung 13' ist dem Ausschaltbereich 19' ein Kurvenabschnitt 15' vorgeschaltet, welcher ein Einschaltsignal am Sensor 30' auslöst. Das Einschaltsignal sorgt für die erwähnte Bewegung 13' des Kurventrägers 10'.

In Fig. 1a ist die Steuerkurve 11' in ihren Bereichen 14', 15' durch unterschiedliche Höhenlagen 16', 17' bestimmt, nämlich einen kleinen Krümmungsradius 17' im Bereich des einschaltwirksamen Kurvenabschnitts 15' und einem großen Krümmungsradius 16' im Ausschaltbereich 19'. Der Sensor 30' und das zugehörige Steuergerät sprechen auf die Flanke 18' an, die sich im Übergang zwischen dem Minimum des kleinen Radius 17' und dem Maximum des großen Radius 16' an der Steuerkurve 11' ergibt.

In der Endposition des Kurventrägers 10' von Fig. 1a wird ein Anschlag 20' wirksam, der z. B. unmittelbar mit dem Kurventräger 10' zusammenwirkt. Der Kurventräger 10' hat nämlich einen Gegenanschlag 22', an dem der Anschlag 20' an seiner einen Schulter 21' zur Anlage kommen soll. Dies wird aber nicht immer exakt erreicht. Wenn im Stand der Technik das Fühlglied 31' des Sensors 30' die Flanke 18' durchlaufen hat, erhält der Motor vom Steuergerät seinen Ausschaltimpuls, doch bleibt dann der Kurventräger 10' und damit auch der Bewegungsteil nicht sofort stehen. In Abhängigkeit von den vorerwähnten internen Betriebsbedingungen und externen Einflüssen läuft der Motor einmal mehr oder weniger weiter und bleibt im Ausschaltbereich 19' an verschiedenen Stellen stehen. Die Ausschaltstelle mit ihrem großen Radius 16' erstreckt sich über einen größeren Ausschaltbereich 19'. Unterschiedliche Endpositionen des Kurventrägers 10' haben unterschiedliche Endlagen des zugehörigen Bewegungsteils zur Folge. Wenn nach dem Abschalten des Motors der Kurventräger 10' verspätet abbremst, schlägt sein Gegenanschlag 22' mit Gewalt an die Schulter 21' des ortsfesten Anschlags 20', wodurch es zu Beschädigungen kommen kann. In jedem Fall ist ein solches Aufeinandertreffen von Anschlag 20' und Gegenanschlag 22' geräuschvoll und wird nicht gebilligt.

Der vom Sensor 30' an das Steuergerät weitergegebene Signalverlauf 14' ist aus Fig. 1b zu erkennen. Im Diagramm der Fig. 1b sind auf der Ordinate die beiden vom Sensor 30' ausgehenden digitalen Signale "0" und "1" aufgetragen, während die Abszisse eine Wegstrecke 23' der Kurventräger-Bewegung 13' bzw. deren zeitlichen Ablauf wiedergibt. Wenn das Fühlglied 31' vom Sensor 30' den abgesenkten Kurvenabschnitt 15' überstreicht, wird das mit 25' in Fig. 1b bezeichnete Signal-Teilstück wirksam, wo der Motor läuft und der Kurventräger 10' bewegt wird. An dem vorerwähnten Übergang 18' findet ein Signalwechsel statt, was der Signalübergang 28' von Fig. 1b wiedergibt. Dann erreicht das Sensor-Fühlglied 31' den erhaben ausgebildeten Ausschaltbereich 19' der Steuerkurve 11', was im Diagramm von Fig. 1b das mit 24' markierte Ausschaltsignal 24' generiert. Dadurch wird der Motor abgeschaltet. Das Getriebe für den Kurventräger 10' und für den nicht näher gezeigten Bewegungsteil in Fig. 1a wird zwar abgebremst, kommt aber zwar, wie gesagt, nicht zielgenau in der Endlage des Bewegungsteils bzw. der in Fig. 1a verdeutlichten Endposition des Kurventrägers 10' zur Ruhe. In Abhängigkeit von der unkontrollierten Bremswirkung schlägt der Gegenanschlag 22' geräuschvoll an die Schulter 21' des Anschlags, was zu einem vorzeitigen Stillstand des Kurventrägers 10' oder zur Beschädigung der Getriebeteile und/oder des Kurventrägers 10' bzw. Bewegungsteils führen kann. Alle bisher genannten unangenehmen Folgen im Stand der Technik will die Erfindung beseitigen.

Der Erfindung liegt die Aufgabe zugrunde, einen zuverlässigen Antrieb der im Oberbegriff von Anspruch 1 genannten Art zu entwickeln, der nach Vollzug der Bewegung stets für eine definierte Endlage des Bewegungsteils sorgt. Dies wird durch die im Anspruch 1 angeführten Maßnahmen erreicht, denen folgende besondere Bedeutung zukommt.

Wenn der Sensor bei der Erfindung an die Ausschaltstelle des Kurventrägers gelangt, beleibt der Motor noch nicht wirklich stehen, sondern wird durch Signale des Steuergerätes gezielt weiterbewegt, bis zu der gewünschten Endposition des Kurventrägers. In dieser Endposition befindet sich der Sensor an der zweiten Steuerstelle des Kurventrägers, die als "Kontrollstelle" bezeichnet werden soll. Die Lage der Kontrollstelle ist durch eine definierte Endlage des Bewegungsteils bestimmt und aus folgendem Grunde unabhängig von allen Betriebsbedingungen des Antriebes. Wenn der Sensor einen Endabschnitt des Kurventrägers abfragt, der zwischen der Abschaltstelle und der Kontrollstelle liegt, so wird der Motor vom Steuergerät in passender Dosierung nachgesteuert.

Im Intervall der Kurve zwischen der Ausschaltstelle und der Kontrollstelle ist der Sensor noch wirksam, um über das Steuergerät den Kurventräger gezielt bis zu dessen Endposition weiterzubewegen. Dann ist sichergestellt, dass auch der Bewegungsteil in seine definierte Endlage gelangt. Diese Steuerung im endseitigen Kurvenintervall dosiert die Bremswirkung mit dem Ziel dieser exakten Endposition des Kurventrägers bzw. der Endlage des Bewegungsteils.

Wie ersichtlich, genügt es für die Erfindung die Steuerkurve vom Kurventräger gegenüber dem Stand der Technik in der geschilderten Weise zu verändern. Abgesehen vom angepassten Steuerprogramm des Steuergeräts brauchen keine zusätzlichen Bauteile vorgesehen sein, die zusätzliche Kosten und weiteren Platz im Fahrzeug erfordern würden. Die Erfindung ist daher preislich und platzmäßig günstig ausgelegt.

Weitere Maßnahmen und Vorteile der Erfindung ergeben sich aus den 2 bis 8 Ansprüchen, der nachfolgenden Beschreibung und den Zeichnungen. Es empfiehlt sich den Kurventräger als Steuerscheibe auszubilden, bei deren weiteren Gestaltung es zwei Möglichkeiten gibt.

Die eine Möglichkeit besteht darin, die Steuerscheibe bei ihrer Bewegung in wenigstens eine Endposition drehbeweglich auszubilden. Dann ist der Kurventräger eine Drehscheibe. Die andere Möglichkeit besteht darin, die Steuerscheibe bei ihrer Bewegung in wenigstens eine Endposition schubbeweglich zu gestalten. In diesem zweiten Fall bildet die Steuerscheibe einen längs beweglichen Schieber.

Auch der Sensor des Antriebs kann in verschiedener Weise ausgebildet sein. Eine erste, besonders einfache Möglichkeit besteht darin, dafür einen

Mikroschalter zu verwenden, der die Höhenunterschiede in der Steuerkurve abtastet. Die Ausschaltstelle in der Steuerkurve sollte dabei durch eine Anstiegsflanke vor einem Nocken ausgebildet sein. Die zusätzliche Kontrollstelle dagegen wird durch eine Abstiegsflanke der Kurve hinter dem Nocken ausgebildet.

Eine andere Möglichkeit für den Sensor besteht darin, ihn als Lichtschranke auszubilden. Dann besteht die Steuerkurve in ihren einzelnen Abschnitten aus Zonen mit unterschiedlicher Lichtdurchlässigkeit.

Für den Kurventräger hat sich dabei folgende Ausbildung bewährt. In Bewegungsrichtung des Kurventrägers gesehen empfiehlt es sich, den Kurvenabschnitt hinter der Ausschaltstelle in gleicher Beschaffenheit auszubilden, wie den Kurvenabschnitt vor der Ausschaltstelle. Im Abschnitt zwischen den beiden Ausschaltstellen kann die Steuerkurve einen im Wesentlichen, kontinuierlichen Kurvenverlauf aufweisen, der für ein Einschaltsignal am Sensor zuständig ist. Wenn der Kurvenabschnitt zwischen den beiden Ausschaltstellen durch Höhenunterschiede in der Steuerkurve erzeugt ist, so sollten die Ausschaltstellen im Wesentlichen die gleiche Kurvenhöhe wie die beiden zusätzlichen Kontrollstellen aufweisen, die sich an den Kurvenenden befinden.

Vorteilhaft ist es, den Antrieb mit einem manuellen und/oder automatisch über ein Steuerprogramm wirksam setzbaren Betätiger auszurüsten. Ein solcher Betätiger schaltet den Motor über ein Steuergerät ein und setzt dadurch den Kurventräger in Bewegung.

Der Kurventräger kann fallweise eine reversible Bewegung ausführen. In diesem Fall wird das Steuergerät ein erstes Ausschaltsignal ignorieren, welches beim Start der Bewegung an der ersten Ausschaltstelle anfällt. Das Steuergerät wird aber auf das Ausschaltsignal der zweiten Ausschaltstelle ansprechen, die der dortigen Kontrollstelle vorgeschaltet ist.

In den Fig. 2 bis 3c ist die Erfindung in einem Ausführungsbeispiel schematisch dargestellt. Es zeigen:
- Fig. 2: in einem Blockschaltbild den elektrischen und mechanischen Aufbau des erfindungsgemäßen Antriebs,
- Fig. 3a: einen wichtigen Bauteil des erfindungsgemäßen Antriebs, nämlich einen Kurventräger in einer ersten Endposition,
- Fig. 3b: den gleichen Kurventräger in einer zweiten Endposition und
- Fig. 3c: in Analogie zu Fig. 2b des Standes der Technik, das Arbeitsdiagramm der elektrischen Steuerung vom erfindungsgemäßen Antrieb im Arbeitsbereich zwischen den beiden Endpositionen von Fig. 3a einerseits und 3b andererseits.

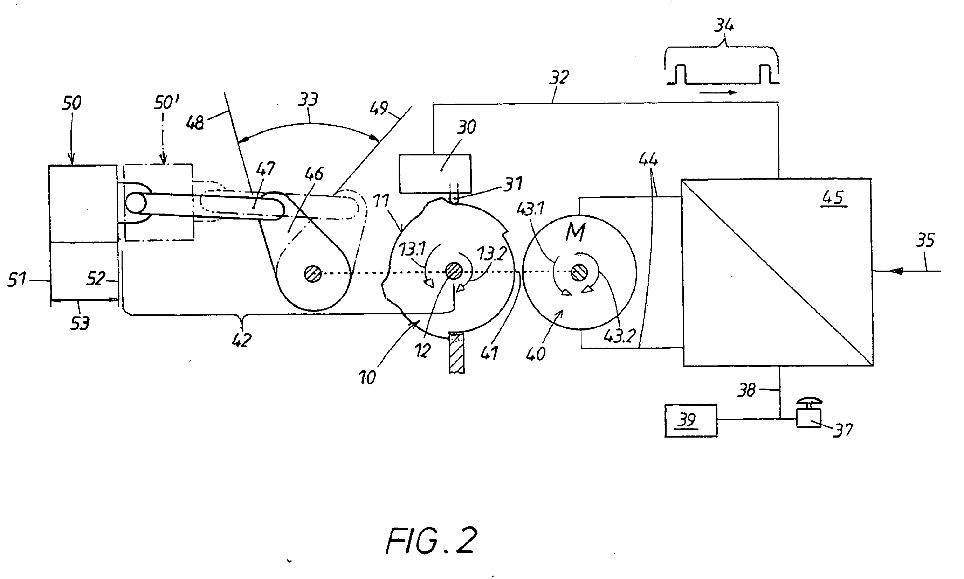

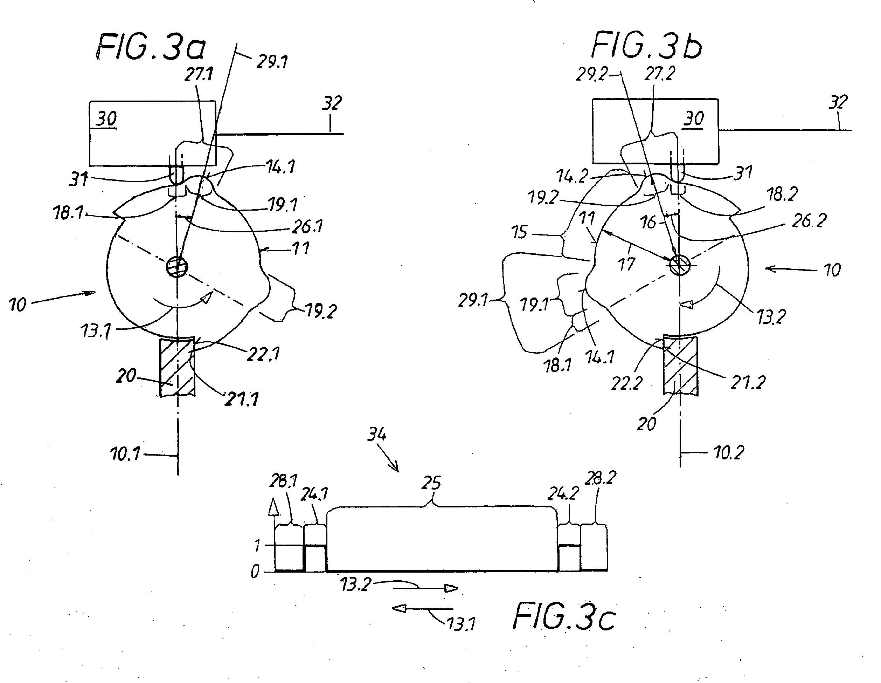

Weil die Fig. 3a bis 3c der Erfindung mit den Fig. zum Stand der Technik gemäß Fig. 1a und 1b übereinstimmen, sollen in den Fig. 2 bis 3c der Erfindung zur Benennung analoger Bauteile zwar die gleichen Bezugszeichen wie in Fig. 1a, 1b benutzt werden, aber zu ihrer Unterscheidung ohne Strich (Apostroph). Insoweit gilt die bisherige Beschreibung. Es genügt lediglich auf die Unterschiede einzugehen.

Fig. 2 zeigt das Bauprinzip des erfindungsgemäßen Antriebs. Es gibt einen Motor 40, der seine Motorbewegung 43.2 über ein Getriebe 41 auf einen analogen Kurventräger 10 überträgt und ihn auf der Welle 12 im Sinne des Drehpfeils 13.1 in Drehung setzt. Der Motor 40 wird auch in diesem Fall von einem Steuergerät 45 ein- und ausgeschaltet, wofür die Leitungen 44 maßgeblich sind.

Im vorliegenden Fall setzt der gleiche Motor 40 über ein ergänzendes oder alternatives Getriebe 42 einen schematisch angedeuteten Bewegungsteil 50 in Betrieb, um ihn z. B. um die aus Fig. 2 ersichtliche Hubstrecke 53 zwischen zwei definierten Endlagen 51, 52 zu bewegen. Letztere sind durch Hilfslinien 51, 52 in Fig. 2 veranschaulicht. Ein Anwendungsfall kann darin bestehen, dass der Bewegungsteil eine Kamera 50 ist, die im oder am Fahrzeug angebracht ist und dort in zwei unterschiedliche Lagen 51, 52 gebracht werden muss. Die eine Endlage 51 der Kamera 50 ist in Fig. 2 ausgezogen gezeichnet, während die andere Endlage 52 strichpunktiert dargestellt ist. Das letzte Glied des Getriebes 42 ist ein Kniehebel-Paar 46, 47, welches beim vorerwähnten Motorumlauf 43.2 eine durch den Pfeil 33 veranschaulichte Schwenkbewegung zwischen zwei durch Hilfslinien 48, 49 veranschaulichten Endlagen ausführt.

Der Kurventräger 10 ist im Ausführungsbeispiel als Drehscheibe ausgebildet, die mindestens in einem Segment ihres Umfangsbereichs einen in besondere Weise ausgebildete und noch näher zu beschreibende Steuerkurve 11 besitzt. Die Steuerkurve 11 wird von einem Sensor 30 überwacht, dessen Fühlglied 31 im vorliegenden Fall durch Berührung das noch näher zu beschreibende besondere Profil der Steuerkurve 11 abtastet. Der Sensor 30 ist im Ausführungsbeispiel als Mikroschalter ausgebildet und über eine Signalleitung 32 mit dem Steuergerät 45 verbunden. Beim Betrieb wird über die Signalleitung 32 eine noch näher zu beschreibende Signalfolge 34 übermittelt. Das Steuergerät 45 ist an eine Versorgungsleitung 35 angeschlossen. Zum Start des Motors 40 dient ein erster Betätiger 37, der z. B. manuell betätigbar ist und über eine Steuerleitung 38 mit dem Steuergerät 45 verbunden ist.

Die Betriebsweise des erfindungsgemäßen Antriebs lässt sich am besten anhand der Fig. 3a bis 3c erläutern. In Fig. 3a befindet sich der Kurventräger 10 in seiner ersten Endposition, die durch eine erste Hilfslinie 10.1 gekennzeichnet ist. Die Fig. 3b zeigt eine zweite Endposition des Kurventrägers 10, die durch eine zweite Hilfslinie 10.2 verdeutlicht ist. Weil die Fig. 3b der Erfindung eine Endposition zeigt, wie sie in analoger Weise auch in Fig. 1a beim Stand der Technik dargestellt und vorausgehend beschrieben wurde, soll die vorerwähnte besondere Ausbildung der erfindungsgemäßen Steuerkurve 11 anhand der Fig. 3b näher erläutert werden.

Es soll angenommen werden, die Endposition 10.2 des Kurventrägers 10 sei in Fig. 3b gerade erreicht worden. Dann beschreibt der Drehpfeil 13.2 in Fig. 3b die soeben vollzogene Drehrichtung des Kurventrägers. Vergleicht man das Kurvenprofil 11 der Erfindung mit demjenigen 11' vom Stand der Technik gemäß Fig. 1a so fällt zunächst auf, dass anstelle eines Ausschaltbereichs 19' eine punktuell ausgebildete Ausschaltstelle 14.2 vorgesehen ist, die von einem Nocken 19.2 gebildet ist. Betrachtet man die Verhältnisse anhand der vorgenannten, gerade vollzogenen Bewegungsrichtung 13.2 des Kurventrägers 10, so ist ausweislich der Hilfslinie 29.2, das Nocken-Maximum um einen voreilenden Winkelbetrag 26.2 gegenüber der Hilfslinie 10.2 zurückgesetzt. Bezogen auf das Sensor-Fühlglied 31 eilt somit die Ausschaltstelle 14.2 in der angenommenen Drehrichtung 13.2 vor.

Wieder, im Sinne der vorgenannten Drehrichtung 13.2 gesehen, ist dem Nocken 19.2 ein Kurvenabschnitt 15 mit einer durch einen kleinen Radius 17 veranschaulichten minimalen Höhenlage vorgeordnet. In diesem Kurvenabschnitt 15 befindet sich der Sensor 30 in einer ersten von insgesamt zwei Stellungen, wo ein "Signal 0" über die Signalleitung 32 dem Steuergerät 45 zugeleitet wird. In diesem Kurvenabschnitt 15 ist der Motor 40 vom Steuergerät 45 eingeschaltet. Es findet die Drehung 13.2 statt. Dem Kurvenabschnitt 15 folgt dann ein Endabschnitt 27.2. Wenn das Sensor-Fühlglied 31 diesen Endabschnitt 27.2 überstreicht, ergeben sich folgende zwei Steuerschritte.

Der Sensor 30 erfasst zunächst den Nocken 19.2. Weil das Nocken-Maximum 29.2 einen großen Höhenradius 16 aufweist, gelangt der Sensor 30 über sein Fühlglied 31 in seine andere Schaltstellung, wo das "Signal 1" an das Steuergerät 45 gelangt. Das entspricht in der Signalfolge 34 von Fig. 3c einem mit 24.2 gekennzeichneten Ausschaltsignal. Aufgrund des Ausschaltsignals 24.2 schaltet das Steuergerät 45 den Motor 40 ab, der nun abzubremsen beginnt. Wegen der Trägheit der Bauteile, wegen der eingangs erwähnten unterschiedlichen Betriebsbedingungen und wegen der Umwelteinflüsse, läuft der Bremsvorgang am Motor 30 und damit an der Drehscheiben-Bewegung 13.2 fallweise unterschiedlich aus. Das wird durch folgenden weiteren Steuerschritt bei der Erfindung ausgeglichen.

Wie Fig. 3b zeigt, ist im Kurven-Endabschnitt 27.2 hinter dem Nocken 19.2 eine Kontrollstelle 18.2 angeordnet, wo die Steuerkurve 11 wiederum eine minimale Höhenlage 17 hat. Im Minimum der Kontrollstelle 18.2 gelangt das Abtastglied 31 des Mikroschalters in seine erste Schaltstellung zurück, die am Ende der in Fig. 3c gezeigten Signalfolge 34 wieder ein "Signal 0" dem Steuergerät 45 zuleitet. In der in Fig. 3c gezeigten Signalfolge entspricht dies dem mit 28.2, bezeichneten Schlusssignal. Erst wenn dieses Schlusssignal 28.2 vorliegt, bleibt der Motor 40 wirklich stehen. So wird die erwähnte zweite Position 10.2 von Fig. 3b mit Sicherheit erreicht. Um dies unabhängig von allen Betriebsbedingungen zu erhalten, wird der Motor 40 vom Steuergerät 45 in passender Dosierung nachgesteuert. Die Umsteuerung zwischen den drei Signalabschnitten 25, 24.2 einerseits und 24.2, 28.2 andererseits findet jeweils durch die beidseitigen Flanken des Nockens 19.2 statt.

Ähnlich wie im Zusammenhang mit Fig. 1a beim Stand der Technik beschrieben wurde, ist auch bei dem erfindungsgemäßen Antrieb ein Anschlag 20 vorgesehen. Im vorliegenden Ausführungsbeispiel wird dieser Anschlag 20 in Wechselwirkung mit dem drehbaren Kurventräger 10 dargestellt. Wenn sich der Kurventräger 10 in seiner zweiten Endposition 10.2 befindet, kommt ein an ihm vorgesehener Gegenanschlag 22.2 an einer Schulter 21.2 des Anschlags 20 zur Anlage. Im Stand der Technik, der die erfindungsgemäße Profilierung der Steuerkurve 11 nicht kennt, würde, wie bereits erwähnt wurde, der Gegenanschlag 22.2 fallweise mit großer Kraft und sehr geräuschvoll gegen die Anschlag-Schulter 21.2 stoßen. Das könnte zur Beschädigung des Antriebs beim Stand der Technik führen. Bei der Erfindung dagegen erfolgt die vorbeschriebene gezielte Abbremsung des im Sinne der Drehung 13.2 bewegten Kurventrägers 10 im erfindungsgemäß gestalteten Kurvenendabschnitt 27.2. Es ist daher mit Sicherheit dafür gesorgt, dass bei der Erfindung der Gegenanschlag 22.2 völlig geräuschlos die definierte Position an seiner ortsfesten Schulter 21.2 erreicht.

Der Gegenanschlag 22.2 wirkt sich, wie ersichtlich, auf den gesamten Antrieb aus, also über das Getriebe 42 auch auf die über die Hubstrecke 53 verfahrbare Kamera 50. Mit der definierten Endposition 10.2 des Kurventrägers 10 ergibt sich somit auch eine exakte Endlage 52 der Kamera in ihrer strichpunktierten Einfahrposition von Fig. 2. Daraus ist erkennbar, dass der Anschlag 20 nicht immer, wie im schematischen Ausführungsbeispiel, am Kurventräger 10 wirksam werden muss. Ein solcher Anschlag 20 könnte vielmehr auch an einem beliebigen anderen Glied der Getriebe 41, 42 oder der Kamera 50 angreifen. Dann ist der vorbeschriebene Gegenanschlag 22.2 eben an diesem Glied oder Gegenstand des erfindungsgemäßen Antriebs angeordnet.

Es soll angenommen werden, dass in der Endposition 10.2 die Kamera 50' sich in ihrer in Fig. 2 strichpunktiert veranschaulichten Einfahrlage 52 befindet, wo die Kamera unwirksam und vorteilhaft in einer Aufnahme des Fahrzeugs geschützt ist. Damit die Kamera 50 in ihre ausgezogen in Fig. 2 gezeichnete erste Endlage 51 ausgefahren werden kann, wo sie wirksam ist, wird der Motor 40 vom Steuergerät 45 wieder in eine Drehung 43.1 von Fig. 2 gesetzt, die, wie ersichtlich, in umgekehrter Richtung gegenüber der vorerwähnten Drehbewegung 43.2 erfolgt. Der Motor 40 ist also reversibel. Dementsprechend wird dann auch die zugehörige Drehscheibe 10 in der Gegenrichtung 13.1 gedreht, was in Fig. 2a durch den gegensinnigen Drehpfeil 13.1 veranschaulicht ist. Wie bereits eingangs gesagt wurde, zeigt auch die Fig. 3a die erste Endposition 10.1 nach Vollzug dieser Gegendrehung 13.1. In Fig. 3a liegen dann die zu Fig. 3b spiegelbildlich gleichen Verhältnisse vor. Die entsprechenden Bauteile sind daher in Fig. 3a mit den analogen Bezugszeichen wie in Fig. 3b gekennzeichnet, allerdings mit dem Unterschied, dass statt ".2" von Fig. 3b die ergänzende Benennung ".1" in Fig. 3a erscheint. Insoweit gelten in spiegelbildlicher Weise die im Zusammenhang mit Fig. 3b beschriebenen Gestaltungen und Wirkungen. Um Wiederholungen zu vermeiden, wird daher auf dem vorausgehenden Beschreibungsabschnitt verwiesen.

Wie schon aus Fig. 3b ersichtlich, ist die Steuerkurve 11 bezüglich der Längsmitte des abgesenkten Kurvenabschnitts 15 spiegelsymmetrisch gleich ausgebildet. Der mittige Kurvenabschnitt 15 wird beidseitig von zwei zueinander spiegelbildlich ausgebildeten Kurvenendabschnitten 27.2, 27.1 begrenzt. Bezogen auf die bereits beschriebene Gegendrehung 13.1 von Fig. 3a ist aber in analoger Weise zu Fig. 3b das dortige Nocken-Maximum 29.1 um den Winkel 26.1 voreilend gegenüber der zugehörigen Kontrollstelle 18.1 angeordnet. Die Kontrollstelle 18.1 ist natürlich wieder in Ausrichtung mit der Hilfslinie 10.1 der in Fig. 3a vorliegenden ersten Endposition 10.1.

Dann befindet sich die Kamera in ihrer ausgezogen in Fig. 2 gezeichneten Ausfahrlage 50, nämlich am Ort der vorbeschriebenen ersten Endlage 51 außerhalb des Fahrzeugs. Die ausgefahrene Kamera 50 ist wirksam und kann die Fahrbahn des Fahrzeugs aufnehmen und auf einem zugehörigen Monitor im Fahrzeug oder an einem beliebigen anderen Ort sichtbar machen.

Nach ausführlicher Beschreibung der beiden Endpositionen 10.1 und 10.2 von Fig. 3a, 3b sollen nun die Verhältnisse näher erläutert werden, die sich bei der Umsteuerung des Antriebs zwischen diesen beiden Endpositionen 10.1, 10.2 ergeben. Die Betrachtung soll ausgehen von der in Fig. 2 gezeigten Einfahrlage 52 der Kamera 50', die, wie erwähnt, der zweiten Endposition 10.2 des Kurventrägers 10 entspricht. Zum Start der Gegendrehung 13.1 erhält das Steuergerät 45 einen entsprechenden Startimpuls über einen weiteren Betätiger 39 oder durch ein von ihm ausgelöstes Steuerprogramm. Ein solcher Betätiger 39 könnte z. B. der Rückwärtsgang eines Schaltgetriebes oder die R-Position eines Wahlhebels vom Automatikgetriebe des Fahrzeugs sein.

Wenn das Steuergerät 45 den Motor 40 im Richtungssinne des Drehpfeils 43.1 antreibt, wird über das Getriebe 41 der Kurventräger 10 im Gegendrehsinn 13.1 von Fig. 2 und Fig. 3a bewegt. Ausgehend von Fig. 3b wird dabei zunächst der dortige Nocken 19.2 vom Sensor 30 erfasst. Das führt zwar zu einem Ausschaltimpuls 24.2 gemäß dem Arbeitsdiagramm von Fig. 3c, doch dieser Impuls 24.2 wird vom Steuergerät 35 ignoriert. Der Motor 40 bleibt eingeschaltet, was natürlich auch für das danach folgende Signalteilstück 25 in der Signalfolge 34 von Fig. 3c gilt. Erst am Ende dieser Gegendrehung 13.1, wenn der Kurvenendabschnitt 27.1 von Fig. 3a erreicht ist, gelangt das Abtastglied 31 vom Sensor 30 an den dortigen Nocken 19.1, wo der Ausschaltimpuls 24.1 der Signalfolge 34 von Fig. 3c sich ergibt. Dieser Ausschaltimpuls 24.1 veranlasst das Steuergerät 45 die Gegendrehung 13.1 des Kurventrägers 10 abzubremsen. Das Steuergerät 45 wartet ab, bis die zugehörige Kontrollstelle 18.1 von Fig. 3a vom Sensor 30 festgestellt wird und erst dann für den Stillstand des Kurventrägers 10 bewirkt. Der Stillstand des Kurventrägers 10 ergibt sich, wenn der Sensor 30 das Schlusssignal 28.1 in der Signalfolge 34 von Fig. 3c dem Steuergerät 45 zuleitet. Dann hat die Kamera die Ausfahrstellung 50 von Fig. 2 erreicht. Eine solche gesteuerte Abbremsung des Getriebes 41, 42 mit den zugehörigen Bauteilen 10, 46, 47, 50 sorgt dafür, dass ein weiterer Gegenanschlag 22.1 des Kurventrägers 10 geräuschlos die zugehörige Gegenschulter 21.1 des Anschlags 20 erreicht.

Die Berührung zwischen dem Anschlag 20 und dem Gegenanschlag 22.1 ist zwar als Wechselwirkung zwischen dem Anschlag 20 und dem Kurventräger 10 veranschaulicht, doch könnten, wie schon gesagt wurde, die Elemente 21.2, 22.1 auch an einer anderen Stelle der Gliederkette zwischen dem Motor und der Kamera 50 angeordnet sein.

## Patentansprüche

1. Antrieb für einen beweglichen Teil in einem Fahrzeug, der nachfolgend Bewegungsteil 50 genannt werden soll, wie einer am Fahrzeug verfahrbaren (53) Kamera (50),
mit einem Motor (40) zum Bewegen (13.1, 13.2) eines Trägers (10) einer Steuerkurve (11), die zwei aufeinanderfolgende funktionsunterschiedliche Steuerstellen aufweist,
wobei die Baueinheit aus Träger (10) und Steuerkurve (11) nachfolgend kurz Kurventräger (10) genannt werden soll,
der Motor (40) den Kurventräger (10) synchron mit dem Bewegungsteil (50) bewegt,
mit einem Sensor (30), der bei der Bewegung (13.1, 13.2) des Kurventrägers (10) den Verlauf der Steuerkurve (11) fortlaufend abfragt,
mit einem Steuergerät (45), das vom Sensor (30) kommende Signale (34) auswertet und den Motor (40) dann ausschaltet, wenn der Sensor (30) an die erste Steuerstelle der Steuerkurve (11) gelangt, die dann als Ausschaltstelle (14.1; 14.2) für den Motor (20) fungiert,
und mit mindestens einer definierten Endlage (51; 52) des Bewegungsteils (50), in welcher sich der Kurventräger (10) bezüglich des Sensors (30) in einer bestimmten Endposition (10.1; 10.2) befindet,
**dadurch gekennzeichnet,**
**dass** - wenn der Sensor (30) an die Ausschaltstelle (14.1) des Kurventrägers (10) gelangt - der Motor (40) noch nicht wirklich stehen bleibt, sondern durch Signale (34) des Steuergerätes (45) sich gezielt weiterbewegt, bis zu der Endposition (10.1; 10.2) des Kurventrägers (10), wobei die Signale (34) Ausschaltimpulse (24.1, 24.2) und Schlusssignale (28.1, 28.2) aufweisen,
**dass** in dieser Endposition (10.1; 10.2) sich der Sensor (30) an der zweiten Steuerstelle des Kurventrägers (10), nämlich einer Kontrollstelle (18.1; 18.2), befindet,
**dass** die Lage der Kontrollstelle (18.1; 18.2) durch eine definierte Endlage (51; 52) des Bewegungsteiles (50) bestimmt und unabhängig von allen Betriebsbedingungen des Antriebs ist,
weil - wenn der Sensor (30) einen Endabschnitt (27.1; 27.2) des Kurventrägers (10) zwischen dessen Abschaltstelle (14.1; 14.2) und dessen Kontrollstelle (18.1; 18.2) abfragt - der Motor (40) vom Steuergerät (45) in passender Dosierung nachgesteuert wird.

2. Antrieb nach Anspruch 1, **dadurch gekennzeichnet, dass** in der Endposition (10.1, 10.2) der Kurventräger (10) an einem Anschlag (20) anliegt.

3. Antrieb nach Anspruch 2, **dadurch gekennzeichnet, dass** der Anschlag (20) ortsfest ist und der Kurventräger (10) einen Gegenanschlag (22.1, 22.2) aufweist, der in der Endposition (10.1, 10.2) am Anschlag (20) zur Anlage (21.1, 21.2) kommt.

4. Antrieb nach Anspruch 3, **dadurch gekennzeichnet, dass** zwischen dem Motor (40) und dem Kurventräger (10) und/oder zwischen dem Kurventräger (10) und dem Bewegungsglied (50) ein Getriebe (41, 42) angeordnet ist,
dass einem Glied des Getriebes (41, 42) ein ortsfester Anschlag zugeordnet ist
und dass das Getriebeglied einen Gegenanschlag (22.1, 22.2) aufweist, der dann an dem Anschlag zur Anlage kommt, wenn sich der Kurventräger (10) in der gewünschten Endposition (10.1, 10.2) befindet.

5. Antrieb nach einem der Ansprüche 1 bis 4, **dadurch gekennzeichnet, dass** den beiden Endpositionen (10.1, 10.2) eines reversibel bewegten Kurventrägers (10) ein gemeinsamer Anschlag (20) zugeordnet ist, der zwei Schultern (21.1, 21.2) aufweist,
und dass die eine Schulter (21.1) mit einem Gegenanschlag (22.1) des Kurventrägers (10), des Bewegungsteils (50) oder des Getriebeglieds (41, 42) zusammenwirkt,
während bei Bewegung (13.2) in entgegengesetzter Richtung die andere Schulter (21.2) mit einem weiteren Gegenanschlag (22.2) des Kurventrägers (10), des Bewegungsteils (50) oder des Getriebeglieds (41, 42) zusammenwirkt.

6. Antrieb nach Anspruch 5, **dadurch gekennzeichnet, dass** anstelle eines gemeinsamen Anschlags ein gemeinsamer Gegenanschlag am Kurventräger (10), am Bewegungsteil (50) oder an einem Getriebeglied (41, 42) vorgesehen ist
und dass der gemeinsame Gegenanschlag mit zwei Anschlägen zusammenwirkt, welche durch die beiden gewünschten Endpositionen (10.1, 10.2) des Kurventrägers (10) oder die beiden Endlagen (51, 52) des Bewegungsteils (50) bestimmt sind.

7. Antrieb nach einem der Ansprüche 1 bis 6, **dadurch gekennzeichnet, dass** der Bewegungsteil eine Kamera (50) ist, die zwischen einer Einfahrlage (52) in einer Aufnahme des Fahrzeugs und einer Ausfahrlage (51) außerhalb der Aufnahme beweglich ist.

8. Antrieb nach einem der Ansprüche 1 bis 7, **dadurch gekennzeichnet, dass** der Bewegungsteil eine Kamera (50) ist, die in ihrer einen Endlage (51) wirksam und ihrer anderen Endlage (52) unwirksam ist.

## Claims

1. A drive for a moveable part in a vehicle, referred to in the following as moving part (50), such as a moveable (53) camera (50) on a vehicle,
with a motor (40) to move (13.1, 13.2) a carrier (10) of a control cam (11), which features two consecutive control points with different functions,
whereby, the structural unit, comprising of a carrier (10) and control cam (11), is referred to in the following as cam carrier (10),
the motor (40) of the cam carrier (10) moves synchronous to the moving part (50),
with a sensor (30) that continuously interrogates the course of the control cam (11) when the cam carrier (10) moves (13.1, 13.2),
with a control device (45) that evaluates the signal (34) coming from the sensor (30) and then switches off the motor (40) when the sensor (30) is at the first control point of the control cam (11), which then functions as switch-off points (14.1, 14.2) for the motor (20),
and, with a minimum of one defined end position (51, 52) of the moving part (50), in which the cam carrier (10) is located at a specified end position (10.1, 10.2) in relation to the sensor (30),
**characterized in that**,
that - when the sensor (30) is at the switch-off point (14.1) of the cam carrier (10) - the motor (40) does not actually remain stationary but, due to signals (34) from the control device (45), continues to selectively move further up to the end position (10.1, 10.2) of the cam carrier (10), whereby, the signals (34) feature switch-off pulses (24.1, 24.3) and end signals (28.1, 28.2),
that, in this end position (10.1, 10.2), the sensor (30) is located at the second control point of the cam carrier (10), namely the control point (18.1, 18.2),
that the position of the control point (18.1, 18.2) is determined by a defined end
position (51, 52) of the moving part (50) and independent from all operating conditions of the drive,
because - when the sensor (30) interrogates an end section (27.1, 27.2) of the cam carrier (10) between its switch-off point (14.1, 14.2) and control point (18.1, 18.2) - the motor (40) is readjusted to the suitable metering by the control device (45).

2. A drive in accordance with claim 1, **characterized in that**, in the end position (10.1, 10.2), the cam carrier (10) rests on a stop (20).

3. A drive in accordance with claim 2, **characterized in that** the stop (20) is fixed and the cam carrier (10) features a counter-stop (22.1, 22.2) that, in the end position (10.1, 10.2), rests (21.1, 21.2) on the stop (20).

4. A drive in accordance with claim 3, **characterized in that** a gearbox (41, 42) is arranged between the motor (40) and the cam carrier (10) and/or between the cam carrier (10) and the moving part (50),
that one element of the gearbox (41, 42) is arranged as a fixed stop
and that the gearbox element features a counter-stop (22.1, 22.2) which then comes to rest on the stop when the cam carrier (10) is located at the required end position (10.1, 10.2).

5. A drive in accordance with one of the claims 1 to 4, **characterized in that** both end positions (10.1, 10.2) of a reversible moving cam carrier (10) are arranged to a common stop (20), which features two shoulders (21.1, 21.2),
and that one of the shoulders (21.1) interacts with one counter-stop (22.1) of the cam carrier (10), the moving part (50) or the gearbox element (41, 42).
whilst, during movement (13.2) in the opposite direction, the other shoulder (21.2) interacts with another counter-stop (22.2) of the cam carrier (10), the moving part (50) or the gearbox element (41, 42).

6. A drive in accordance with claim 5, **characterized in that**, instead of a common stop, a common counter-stop is provided on the cam carrier (10), the moving part (50) or a gearbox element (41, 42)
and that the common counter-stop interacts with two stops determined by both required end positions (10.1, 10.2) of the cam carrier (10) or both end positions (51, 52) of the moving part (50).

7. A drive in accordance with one of the claims 1 to 6, **characterized in that** the moving part is a camera (50) that can be moved between a retracted position (52) in a receptacle in the vehicle and an extended position (51) outside the receptacle.

8. A drive in accordance with one of the claims 1 to 7, **characterized in that** the moving part is a camera (50) that operates at one end position (51) and does not operate at the other end position (52).

## Revendications

1. Entraînement pour un élément mobile dans un véhicule, ci-après appelé élément mobile (50), comme une caméra (50) déplaçable (53) au niveau du véhicule,
équipé d'un moteur (40) pour déplacer (13.1, 13.2) un support (10) d'une came de commande (11) qui présente deux points de commande successifs remplissant des fonctions différentes,
sachant que l'unité constructive composée du support (10) et de la came de commande (11) doit ci-après être appelée succinctement support de came (10),
que le moteur (40) déplace le support de came (10) en synchronisme avec l'élément mobile (50),
équipé d'un capteur (30) qui, lorsque le support de came (10) se déplace (13.1, 13.2), détecte en permanence le tracé de la came de commande (11),
équipé d'un appareil de commande (45) qui analyse les signaux (34) en provenance du capteur (30) et éteint le moteur (40) lorsque le capteur (30) parvient au premier point de commande de la came de commande (11), qui officie alors de point d'extinction (14.1 ; 14.2) du moteur (20),
et présentant au moins une position finale (51 ; 52) définie de l'élément mobile (50) sur laquelle le support de came (10) se trouve sur une position finale précise (10.1 ; 10.2) par rapport au capteur (30)
**caractérisé en ce que**
lorsque le capteur (30) parvient au point d'extinction (14.1) du support de came (10), le moteur (40) ne s'immobilise pas encore vraiment mais continue de se déplacer de manière ciblée, en raison de signaux (34) de l'appareil de commande (45), jusqu'à la position finale (10.1 ; 10.2) du support de came (10), sachant que les signaux (34) contiennent des impulsions d'extinction (24.1, 24.2) et des signaux de clôture (28.1, 28.2),
dans cette position (10.1 ; 10.2) le capteur (30) se trouve sur le deuxième point de commande du support de came (10), à savoir un point de contrôle (18.1 ; 18.2),
la position du point de contrôle (18.1 ; 18.2) est définie par une position finale définie (51 ; 52) de l'élément mobile (50) et qu'elle ne dépend d'aucune condition de service de l'entraînement,
car - lorsque le capteur (30) détecte un segment final (27.1 ; 27.2) du support de came (10) entre son point de coupure (14.1 ; 14.2) et son point de contrôle (18.1 ; 18.2) - le moteur (40) reçoit de l'appareil de commande (45) un signal de mise au point dosé de manière adaptée.

2. Entraînement selon la revendication 1, **caractérisé en ce que** sur la position-finale (10.1, 10.2), le support de came (10) applique contre une butée (20).

3. Entraînement selon la revendication 2, **caractérisé en ce que** la butée (20) est à demeure et que le support de came (10) présente une butée antagoniste (22.1, 22.2) qui en position finale (10.1, 10.2) vient appliquer (21.1, 21.2) contre la butée (20).

4. Entraînement selon la revendication 3, **caractérisé en ce qu'**une transmission (41, 42) est agencée entre le moteur (40) et le support de came (10) et/ou entre le support de came (10) et l'organe mobile (50),
**en ce qu'**à un élément de la transmission (41, 42) est affectée une butée à demeure
et **en ce que** l'organe de transmission présente une butée antagoniste (22.1, 22.2) qui vient ensuite appliquer contre la butée lorsque le support de came (10) se trouve sur la position finale (10.1, 10.2) souhaitée.

5. Entraînement selon l'une des revendications 1 à 4, **caractérisé en ce qu'**aux deux positions finales (10.1, 10.2) d'un support de came (10) à déplacement réversible est affecté une butée conjointe (20) présentant deux épaulements (21.1, 21.2),
et **en ce qu'**un épaulement (21.1) interagit avec une butée antagoniste (22.1) du support de came (10), de l'élément mobile (50) ou de l'organe de transmission (41,42),
tandis qu'en cas de mouvement (13.2) en direction opposée l'autre épaulement (21.2) interagit avec une autre butée antagoniste (22.2) du support de came (10), de l'élément mobile (50) ou de l'organe de transmission (41, 42).

6. Entraînement selon la revendication 5, **caractérisé en ce qu'**à la place d'une butée conjointe est prévue une butée antagoniste conjointe contre le support de came (10), contre l'élément mobile (50) ou contre un organe de transmission (41, 42)
et **en ce que** la butée antagoniste conjointe interagit avec deux butées définies par les deux positions finales souhaitées (10.1, 10.2) du support de came (10) ou les deux fins de course (51, 52) de l'élément mobile (50).

7. Entraînement selon l'une des revendications 1 à 6, **caractérisé en ce que** l'élément mobile est une caméra (50) déplaçable entre une position d'entrée (52) dans un réceptacle du véhicule et une position de sortie (51) hors du réceptacle.

8. Entraînement selon l'une des revendications 1 à 7, **caractérisé en ce que** l'élément mobile est une caméra (50) opérante dans l'une (51) de ses positions finales et inopérante dans l'autre (52).
